# DEMANDE DE BREVET EUROPEEN

(11) **EP 2 039 880 A2**
(43) Date de publication de la demande: **25.03.2009**
(21) Numéro de dépôt: 08164779.4
(22) Date de dépôt: 22.09.2008
(51) Int. Cl.: E21B 49/08, G01N 1/14

(54) **Préleveur statique multi-niveaux**

(30) Priorité: 24.09.2007 FR 0757794
(71) Demandeur: COMMISSARIAT A L'ENERGIE ATOMIQUE, 75015 Paris (FR)
(72) Inventeur: GETTO, Daniel, 38120, LE FONTANIL (FR); BURGHOFFER, Patrick, 38850, CHIRENS (FR); CÔME, Jean-Marie, 01700, NEYRON (FR); KASKASSIAN, Sébastien, 69100, VILLEURBANNE (FR)
(74) Mandataire: Ilgart, Jean-Christophe

(57) **Abrégé**

L'invention concerne un dispositif de prélèvement d'eau souterraine comprenant au moins un module de prélèvement (100) et des moyens de positionnement du module de prélèvement dans un forage, le module de prélèvement comprenant une première partie (2) possédant une chambre de prélèvement (20) pourvue d'une ouverture d'accès pour l'eau souterraine et une deuxième partie (1) apte à fermer de manière étanche ladite ouverture d'accès. Le dispositif comprend en outre des moyens de déplacement relatif de la deuxième partie par rapport à la première partie de manière à provoquer un coulissement relatif de la deuxième partie par rapport à la première partie entre une position de fermeture pour laquelle la chambre de prélèvement (20) n'est pas en communication de fluide avec l'eau souterraine et une position d'ouverture pour laquelle la chambre de prélèvement (20) est en communication de fluide avec l'eau souterraine.

## Description

### DOMAINE TECHNIQUE

La présente invention concerne un préleveur statique multi-niveaux permettant d'obtenir des prélèvements de fluide dans des aquifères.

### ÉTAT DE LA TECHNIQUE ANTÉRIEURE

Les processus spécifiques de migration dans les aquifères des polluants peu miscibles à l'eau tels que les hydrocarbures pétroliers et les dérivés halogénés sont bien connus, avec une répartition préférentielle de la phase organique dans la zone de battement de la nappe pour les hydrocarbures pétroliers, et une répartition discrète sous forme de lentilles dispersées de faible dimension dans l'aquifère pour les composés organo-halogénés volatils.

Néanmoins, les conséquences pratiques de cette répartition spatiale fortement hétérogène sur les concentrations dans l'eau sont peu étudiées, en témoignent les pratiques usuelles d'échantillonnage fondées sur le pompage de la colonne d'eau présente dans le puits.

Depuis la fin des années 1990, des travaux utilisant des préleveurs multi-niveaux ont cependant montré de très forts gradients verticaux de concentration dans l'eau (classiquement 3 ou 4 ordres de grandeur entre valeurs minimales et maximales) qu'une approche métrologique classique n'est pas capable de déceler. En effet, les techniques d'échantillonnage par pompage (y compris avec packer) ont comme effet d'attirer l'eau provenant préférentiellement des niveaux lithologiques les plus perméables, donc les plus rapidement soumis à la dissolution, et donc généralement les moins chargés en polluants.

Par ailleurs, les diverses expériences acquises sur la modélisation du transfert huile/eau montrent que dans bien des cas, lorsque l'accessibilité au polluant est suffisante, le contact eau/hydrocarbures ou eau/solvant chloré est bien décrit par l'équilibre de dissolution. Toutefois, de nombreux auteurs constatent sur des expériences de laboratoire une limitation de ce transfert. Ceci peut être dû à de nombreux facteurs : nature du milieu poreux, vitesses de circulation de l'eau, état de dispersion de la phase organique... En fait, pour une configuration donnée, il existe une échelle à laquelle le transfert est bien décrit par l'équilibre thermodynamique de dissolution.

Toute modélisation du transfert basée sur cet équilibre doit donc prendre en compte une description des mécanismes à une échelle égale ou plus petite. L'expérience montre que la dimension caractéristique du transfert huile / eau « à l'équilibre » varie de l'échelle du pore à l'échelle décimétrique (carotte de laboratoire). Cette dimension est affectée, d'une part par des hétérogénéités du milieu et de répartition du polluant, d'autre part, par le développement plus ou moins instable des fronts de dissolution. Dans le premier cas (échelle du pore), il est illusoire de réaliser un modèle d'expérience de laboratoire et à plus forte raison de site en supposant l'équilibre de dissolution pour des raisons évidentes de taille et de nombre de mailles à considérer. Par contre, dans le deuxième cas (échelle décimétrique), un modèle de site basé sur l'équilibre de dissolution peut parfaitement être envisagé, à condition toutefois d'utiliser un maillage décimétrique pour représenter la zone de transfert.

Sur un plan technique, il persiste cependant un déficit d'outils métrologiques permettant des prélèvements représentatifs de la qualité d'eau de nappe, de codes numériques incluant des modèles de dissolution différents des modèles à l'équilibre, de méthodologies et de normes sur cette problématique. Pourtant, sur un plan économique, les études nécessitant l'évaluation des cinétiques de dissolution sont de plus en plus nombreuses, en particulier les études d'impact, les évaluations des risques sanitaires et le dimensionnement de certains procédés de dépollution.

Concernant le volet métrologie, quatre principaux types d'échantillonneurs multi-niveaux ont été identifiés :
- deux échantillonneurs à l'avancement lors de la foration, prélevant par pompage l'eau interstitielle (Waterloo Ground Water Profiler et Geoprobe Groundwater Profiler),
- trois échantillonneurs actifs, à introduire dans un piézomètre, fonctionnant avec un pompage d'eau multipoint dans le piézomètre (Waterloo Multilevel System, CMT et Vegas),
- deux échantillonneurs passifs, à introduire dans un piézomètre, basés sur le principe de la diffusion moléculaire (DMLS et DPB),
- un préleveur à ouverture commandée sur une profondeur unique, que l'on descend successivement à différentes profondeurs dans le piézomètre.

L'échantillonneur « Waterloo Ground Water Profiler » a été développé au milieu des années 1990. Il permet un prélèvement d'eau interstitielle à l'avancement lors de la foration dans l'aquifère. Le préleveur est constitué d'une pointe profilée en acier inoxydable, située à l'extrémité d'un train de tiges de forage, et munie latéralement d'un port crépiné de prélèvement d'eau. Le port de prélèvement est relié à une ligne (acier inoxydable ou Teflon^{®}) qui permet l'acheminement de l'eau jusque dans les flacons de prélèvement et la pompe péristaltique (pompe à vide) montés en série. La pointe pénétrante est descendue dans les terrains à l'aide d'une machine de forage et le prélèvement d'eau se fait à l'avancement après purge pour renouveler l'eau en contact direct avec la pointe et la colonne d'eau dans la ligne de prélèvement. La présence d'une pompe à vide placée en aval des flacons de prélèvement empêche le dégazage des composés volatils (dépression jusqu'au remplissage des flacons mais ensuite le pompage se fait sans « ciel »). L'injection d'eau distillée par la pompe vers les ports de prélèvement de la sonde nettoie les tubes et évite que les ports de prélèvement ne se bouchent pendant la descente dans le milieu poreux (développement local des ports crépinés).

Les avantages annoncés de ce système sont : une très bonne représentativité des échantillons, avec mise en évidences d'hétérogénéités verticales très fortes (3 ordres de grandeur sur 1 m) ; l'obtention d'un profil vertical de concentrations dans l'aquifère sans limitation forte du pas minimal d'échantillonnage (quelques centimètres a priori sur le système de prélèvement d'eau, probablement de l'ordre du décimètre en intégrant les contraintes liées à l'engin de forage) ; un échantillonnage facile et rapide qui permet l'obtention d'un panache complet ; le couplage de la pointe à une sonde CPT (pour « Cone Penetrating Testing ») pour la caractérisation de la résistivité des terrains.

Les inconvénients de ce type d'échantillonneur sont en contrepartie : l'impossibilité de faire un suivi dans le temps des concentrations en polluants dans l'aquifère ; la mise en oeuvre qui nécessite un engin de forage ; les refus de pénétration de la pointe dans des horizons indurés (calcaire par exemple) ou dans des aquifères comprenant de gros galets.

L'échantillonneur « Geoprobe Groundwater Profiler » est développé et commercialisé depuis environ 2000. Le principe est le même que le Waterloo Ground Water Profiler, fondé sur le prélèvement d'eau interstitielle à l'avancement. Cet échantillonneur est monté sur le système de forage standard (forage manuel ou mécanique) qui est constitué à l'origine d'un système double enveloppe. Sa partie innovante consiste en la présence d'une portion PVC crépinée pour le prélèvement d'eau. La mise en oeuvre de cet échantilloneur suit les étapes suivantes : (1) le tubage externe est descendu jusqu'à l'extrémité de la portion crépinée soit en enlevant la carotte supérieure soit en descendant en force une pointe pénétrante, (2) le train de tiges interne avec le carottier ou la pointe pénétrante est remonté, (3) le train de tiges avec la portion crépinée est descendu dans le tubage externe, (4) le tubage externe est remonté d'environ 30 cm pour exposer la portion crépinée aux terrains environnants, (5) le train de tiges avec la portion crépinée est remonté et est remplacé par le train de tiges interne avec le carottier ou la pointe pénétrante pour prélever l'horizon suivant. Le prélèvement d'eau est réalisé à l'aide d'une pompe de surface après purge pour renouveler l'eau en contact direct avec les crépines et la colonne d'eau dans la ligne de prélèvement.

Les avantages énoncés de ce système sont : une très bonne représentativité des échantillons (pas de perturbation du fait de la présence d'un piézomètre) ; l'obtention d'un profil vertical de concentrations dans l'aquifère avec un pas minimal d'échantillonnage de l'ordre de 30 cm ; la possibilité de réaliser des prélèvements de sols à l'avancement avec le même appareillage.

Les inconvénients de ce type d'échantillonneur sont en contrepartie : l'impossibilité de faire un suivi dans le temps des concentrations en polluants dans l'aquifère ; un pas d'échantillonnage supérieur au décimètre ; la répétition des étapes de descente et de remontée des trains de tiges pour chaque horizon prélevé ; la mise en oeuvre qui nécessite un engin de forage ; les refus de pénétration de la pointe dans des horizons plus « durs » (calcaire par exemple) ou de gros galets.

Le dispositif Waterloo Multilevel System a été développé en 1984 (voir le brevet US 5 048 605). Il est constitué d'éléments de tube en diamètre 50 mm (version standard) entre lesquels sont insérés d'une part des cellules de prélèvement et d'autre part des packers. Les cellules de prélèvement sont des cylindres dont une partie est munie d'ouvertures pour permettre l'entrée de l'eau dans le système. Les ouvertures sont reliées directement à un tuyau d'échantillonnage remontant vers la surface. Les packers (d'une longueur de 90 cm environ dans le système standard) sont installés entre les zones que l'on souhaite échantillonner, de façon à isoler chaque cellule d'échantillonnage et éviter les contaminations croisées.

Le prélèvement au niveau de chaque cellule d'échantillonnage se fait soit par aspiration à partir de la surface (nappe à moins de 7 mètres), soit au moyen de pompes refoulantes pneumatiques à membrane. Ces pompes sont alors installées directement au niveau de la cellule de prélèvement ce qui permet le pompage à grandes profondeurs. Les pompes utilisées sont en acier inoxydable avec membrane en Téflon^{™}, et sont d'un diamètre très petit (16 mm). Le nombre maximum de zones d'échantillonnage distinctes dans un même ouvrage est de 12 pour un système standard.

Les avantages annoncés de ce système sont : une très bonne représentativité des échantillons ; l'obtention d'un profil vertical de concentrations dans l'aquifère et un échantillonnage facile et rapide.

Les inconvénients de ce type d'échantillonneur sont en contrepartie : la complexité du matériel et de l'entretien (nettoyage, assemblage, désassemblage), le coût (temps passé sur le terrain, consommables) ; les courts-circuits éventuels par le massif filtrant qui peuvent mettre en communication partielle deux cellules de prélèvement ; le pas minimal d'échantillonnage élevé par rapport à d'autres préleveurs multi-niveaux (environ 1,20 m) ; le nombre maximal limité d'échantillons collectés.

Le préleveur « CMT Multilevel System » est techniquement proche du dispositif Waterloo Multilevel System. Il est également constitué d'éléments de tubes d'environ 50 mm de diamètre, entre lesquels sont insérées des cellules d'échantillonnage (petits éléments de tubes perforés) séparées par des packers. La principale différence est liée à la construction des éléments de tubes, dont la section est divisée en 7 « quartiers » de diamètre équivalent de 12,7 mm. Un tube du préleveur CMT est donc l'équivalent de 7 petits tubes assemblés les uns avec les autres. Chaque cellule d'échantillonnage est reliée à l'un de ces 7 quartiers. Elle constitue à la fois le point de prélèvement et le fond du tube pour ce quartier. En clair, le préleveur CMT est l'équivalent d'une série de 7 petits piézomètres captant des niveaux différents (souvent dénommés piézomètres en « flûte de pan »).

Le prélèvement dans chacun des tubes s'effectue soit au moyen d'une pompe aspirante (péristaltique par exemple), soit au moyen d'une pompe à inertie de faible diamètre, soit au moyen d'une pompe refoulante à déplacement de gaz, de faible diamètre.

Les avantages annoncés de ce système sont : une très bonne représentativité des échantillons ; l'obtention d'un profil vertical de concentrations dans l'aquifère ; un échantillonnage facile et rapide.

Les inconvénients sont les mêmes que ceux du Waterloo Multilevel System, avec par ailleurs une limitation à 7 zones de prélèvement par piézomètre.

Le dispositif de VEGAS a été conçu pour la prise d'échantillons de composés volatils dans la nappe. Les échantillons sont prélevés à la profondeur souhaitée dans des flacons « head space » après mesure de la profondeur du prélèvement à l'aide d'une sonde. Les échantillons recueillis sont directement analysés en SPME/CPG (Solide Phase Micro Extraction / Chromatographie en Phase gazeuse) sans préparation supplémentaire (flacon rempli partiellement), ce qui évite les éventuels pertes de volatils.

Le dispositif, garni d'un flacon « head space » fermé par un septum, est placé au point de mesure souhaité dans le piézomètre. Par des valves à air comprimé qui permettent de déplacer un piston pour le flacon et un pison pour l'échantillon, on rince alors le cylindre du piston pour l'échantillon plusieurs fois avec l'eau à prélever. Le va et vient du piston pour l'échantillon (3 fois) assure successivement l'évacuation de l'air, le rinçage du cylindre et l'emmagasinement de l'échantillon dans le cylindre pour l'échantillon. Une pression est ensuite exercée sur le cylindre pour le flacon, ce qui déplace le flacon échantillonneur vers l'aiguille perforant le septum. L'application d'une nouvelle pression sur le piston pour l'échantillon fait migrer l'échantillon d'eau dans le flacon. Le dispositif est alors relevé de la zone de mesure et le flacon « head space » retiré pour l'analyse.

Les avantages annoncés de ce système sont : prise d'échantillon sans variation de pression ; prélèvement des échantillons dans des récipients qui peuvent être transférés directement dans l'analyseur ; dispositif simple, sans infrastructure additionnelle ; système d'échantillonnage à faible coût ; peu de pertes de volatils en comparaison avec les méthodes classiques (le seuil de détection est aussi abaissé) ; étanchéité du flacon après percement du septum: aucune fuite jusqu'à 2,5 bars.

Les inconvénients de l'échantillonneur de VEGAS sont en contrepartie : présence d'un flux vertical d'eau qui peut biaiser les résultats, notamment lorsque l'aquifère présente des hétérogénéités de perméabilité ; interprétation indirecte des concentrations par exploitation des flux massiques, ce qui nécessite de connaître les propriétés de chaque formation de l'aquifère (perméabilité, épaisseur) ; pas d'échantillonnage minimal de l'ordre de 30 cm.

L'échantillonneur DMLS (Discrete level Multi-Layer Sampler) est un échantillonneur passif multi-niveaux basé sur le principe de la dialyse (voir le brevet US 4 857 473). Ce brevet divulgue une méthode permettant de déterminer des profils de concentrations de composés dissous dans l'eau (nappe, réservoir, lac, ...), les composés traversant des membranes de dialyse placées à chaque extrémité d'une cellule et les cellules insérées dans un équipement modulaire présentant un intervalle prédéterminé et acceptant une série de cellules. Cet échantillonneur d'eau est constitué d'un corps cylindrique en PVC percé de cavités à intervalles réguliers.

Les cavités sont prévues pour recevoir des cellules de dialyse constituées d'un corps cylindrique en polypropylène ou en acier inoxydable d'une capacité de 14 ou 38 ml en fonction de leur longueur. Les cellules de 38 ml ne sont utilisables que dans les piézomètres de diamètre minimal 4 pouces (101 mm). Chaque cellule est fermée aux deux extrémités par une membrane de dialyse (membrane de nylon de porosité 0,2 µm). Des joints en caoutchouc ou en Viton^{®}, placés sur le corps de l'échantillonneur, permettent d'isoler des « chambres de prélèvement » au centre desquelles se trouvent les cellules.

Le principe de fonctionnement des cellules de dialyse est le suivant. Chaque cellule est remplie d'eau distillée. Une fois plongée dans la nappe, la diffusion moléculaire des substances dissoutes dans l'eau de la nappe se fait au travers de la membrane de dialyse, jusqu'à l'obtention d'un équilibre chimique entre l'intérieur de la cellule et le milieu naturel. Lorsque l'équilibre est atteint, la cellule contient un échantillon représentatif de l'eau de la nappe.

Lorsque le DMLS est descendu dans un piézomètre, les joints d'étanchéité vont isoler des « tranches » d'aquifère d'épaisseur égale à la distance entre deux joints. Chaque cellule de dialyse placée entre les joints est donc représentative d'une seule tranche d'aquifère, permettant ainsi d'obtenir un profil vertical des concentrations dans l'aquifère.

En pratique, la mise en place du DMLS dans le piézomètre génère un mélange de l'eau contenue dans l'ouvrage. En conséquence, hormis le temps nécessaire pour que l'équilibre des concentrations soit atteint entre l'intérieur et l'extérieur de la cellule, il est recommandé que le DMLS soit laissé plusieurs jours en place pour que la nappe retrouve son régime naturel de stratification des écoulements (lequel est fonction de la vitesse de la nappe).

Le DMLS a fait l'objet de publications concernant l'étude de la répartition verticale des paramètres hydrochimiques et des métaux dans les aquifères. Ces études ont montré que le DMLS permettait une bonne représentativité des échantillonnages et une évaluation précise de la répartition verticale des éléments dans l'aquifère. Des études sur les composés organiques ont également été réalisées dans un but de comparaison avec d'autres techniques de prélèvement. Il convient ici de noter que la membrane utilisée peut et doit être adaptée aux composés recherchés : les membranes en nylon semblent être adaptées aux métaux et colloïdes alors que celles en acétate de cellulose conviennent aux composés organiques volatils.

Les avantages annoncés pour le DMLS sont les suivants : très bonne représentativité des échantillons ; échantillonnage passif, pas de dépense énergétique, a priori plus représentatif que les préleveurs actifs ; pas d'échantillonnage très petit (11,3 cm), plus faible que les préleveurs multi-niveaux actifs, et en conséquence grand nombre de points de mesure possibles sur une même verticale (maximum 200 points de mesure pour le DMLS de diamètre 56 mm).

Les inconvénients du DMLS sont en contrepartie : durée d'échantillonnage relative longue et variable selon les composés (7 à 10 jours) ; longueur limitée du préleveur (6 m pour des piézomètres inférieurs à 4 pouces (101 mm), 22,50 m pour des piézomètres de diamètre supérieur) ; faible volume d'eau prélevée, ce qui peut être une contrainte pour l'analyse ; risque de court-circuit via le massif filtrant dans le cas de niveaux de pression différents dans l'aquifère (présence de niveaux peu perméables, ...).

Le dispositif de prélèvement PDB (Passive Diffusion Bags) est mis en oeuvre sous forme d'assemblage vertical de plusieurs préleveurs à diffusion. Chaque PDB comprend un sac constitué d'une membrane semi-perméable en polyéthylène basse densité (taille des pores ≤ 10 Å, épaisseur du film de l'ordre de 0,1 mm) que l'on remplit d'eau distillée. Pour éviter que la membrane semi-perméable ne se déchire, une gaine protectrice peut être installée autour du corps cylindrique. Les PDB sont disponibles en version usage unique, mais également en version réutilisable. Dans ce dernier cas, les PDB sont des tubes en acier inoxydable équipés d'une membrane semi-perméable à l'une de ses extrémités. Pour réaliser un prélèvement multi-niveaux, une corde tressée en polypropylène permet de fixer les deux extrémités de chaque sac ainsi qu'un ou plusieurs poids en série en fin de corde.

Selon les fournisseurs, les dimensions des sacs varient : le diamètre moyen est de l'ordre de 30 mm et les longueurs disponibles sont de 15 (commande spécifique), 33 et 65 cm, soit un volume allant de 50 à 300 ml environ. La longueur maximale de la chaîne de sacs ainsi constituée est a priori sans limite (il convient cependant de lester la chaîne de sacs avec un nombre suffisant de poids).

Ce dispositif est très similaire au DMLS dans son principe puisqu'il requiert de remplir les sacs d'eau distillée, de descendre la chaîne de sacs dans le piézomètre et de laisser le dispositif dans l'ouvrage jusqu'à atteinte des conditions d'équilibre hydrodynamique et des concentrations de part et d'autre de la membrane (au minimum de 2 à 3 semaines d'après les fournisseurs). Cependant, contrairement au DMLS, il ne comporte pas de joints permettant d'isoler les sacs entre eux : le risque de mélange entre les différentes tranches d'eau investiguées est donc d'autant plus grand.

Les avantages annoncés pour le PDB sont les mêmes que ceux du DMLS avec en plus : une grande facilité de mise en oeuvre ; un coût faible (temps passé sur le terrain, consommables) ; une absence de nettoyage car les sacs sont jetables ; pas de limite théorique de la longueur de la chaîne de sac.

Les inconvénients sont principalement : la durée de l'échantillonnage (recommandée à 2 semaines minimum) ; des risques de mélange entre les tranches d'aquifère investiguées (absence de joint entre deux PDB) ; un pas d'échantillonnage plus élevé que le DMLS (au minimum 30 cm contre 11 cm pour le DMLS).

Les préleveurs commandés permettent de réaliser des échantillonnages d'eau à une profondeur déterminée, sans contamination croisée due au passage de l'eau dans le préleveur, puisque l'ouverture de la valve de remplissage se fait de façon commandée (directement ou indirectement).

Parmi les modèles existants, on citera par exemple le dispositif commercialisé par SILEX International ou Solinst. Ce préleveur, fabriqué en acier inoxydable, est disponible en diamètre 25 à 50 mm pour une longueur de tube de 60 cm. Les volumes de prélèvement varient de 200 à 960 ml.

La mise en oeuvre du préleveur dans un piézomètre se fait comme suit. Avant descente dans le piézomètre, le préleveur est mis sous pression (avec de l'air ou de l'azote) de façon à fermer la valve de remplissage. La pression appliquée dans le préleveur est calculée pour être supérieure d'environ 1 bar à la pression de l'eau à la profondeur à laquelle on souhaite effectuer le prélèvement. On descend ensuite le préleveur dans l'ouvrage à échantillonner. La valve de remplissage reste fermée durant la descente. Lorsque le préleveur est descendu à la profondeur voulue, on dépressurise le préleveur en ouvrant la vanne du tuyau de mise en pression. La valve s'ouvre et laisse pénétrer l'eau dans le préleveur. Avant de remonter le préleveur, on applique à nouveau la pression initiale (1 bar supérieure à la pression de l'eau) ce qui ferme la valve de remplissage et conserve l'échantillon d'eau sous pression (pas de dégazage).

Les avantages annoncés de ce type de préleveur sont les suivants : grande rapidité et facilité de mise en oeuvre ; coût faible (temps passé sur le terrain, consommables).

Par contre, ce préleveur a deux limites importantes :
- mélange des eaux dans le piézomètre lors de la descente et la remontée du préleveur (effet piston d'autant plus marqué que les ouvrages ont un faible diamètre), ce biais pouvant être diminué en descendant/remontant très lentement le préleveur et en attendant un retour à l'équilibre des conditions hydrodynamiques (délai d'attente estimé de façon quelque peu empirique en fonction de la vitesse de nappe),
- une seule mesure est possible à chaque descente du préleveur. Pour obtenir un profil vertical des concentrations, il convient de descendre le préleveur autant de fois que de points de mesure souhaités, avec le risque de perturber la stratification des eaux dans le puits à chaque remontée/descente du préleveur.

US 3 306 638 divulgue un dispositif de prélèvement d'échantillons dans un sol. Ce dispositif comprend :
- un tube dont une partie constitue une zone de prélèvement latéral, permettant une communication de fluide entre l'intérieur et l'extérieur du tube,
- un piston disposé dans le tube, le piston et le tube pouvant coulisser de manière étanche l'un par rapport à l'autre, le piston comprenant un premier élément circulaire pourvu de moyens d'étanchéité avec le tube et un deuxième élément circulaire pourvu de moyens d'étanchéité avec le tube, les deux éléments étant reliés entre eux par des moyens de solidarisation et séparés l'un de l'autre de façon à constituer une chambre de prélèvement de fluide dans le piston lorsque le piston est à l'intérieur du tube,
- des moyens de déplacement aptes à déplacer le piston à l'intérieur du tube, entre une position de fermeture pour laquelle la chambre de prélèvement n'est pas en communication de fluide avec la zone de prélèvement du tube et une position d'ouverture pour laquelle la chambre de prélèvement est en communication de fluide avec la zone de prélèvement du tube.

Le dispositif divulgué dans le brevet US 3 036 638 ne peut que réaliser un prélèvement rapide puisque la hauteur de la chambre de prélèvement entre les deux éléments du piston est beaucoup plus importante que la hauteur des ouvertures d'accès. Ce dispositif ne permet donc pas de prélever un échantillon représentatif d'une nappe examinée puisque l'eau de la nappe ne peut pas circuler librement dans la totalité de la chambre de prélèvement.

### EXPOSÉ DE L'INVENTION

Pour remédier aux inconvénients des systèmes de l'art antérieur cités ci-dessus, il est proposé, selon la présente invention, un appareillage qui permet d'obtenir des prélèvements d'eau multiniveaux représentatifs en des points donnés et dont la composition de ces prélèvements reflète celle des eaux souterraines étudiées. Cet appareillage, ou préleveur, a été conçu pour éviter l'utilisation de pompes de surface ou de pompes internes au préleveur dont de nombreuses études ont mis en évidence le rôle néfaste de certains paramètres sur l'échantillonnage d'eau souterraine (volume, débit, temps, position de la pompe dans le forage, etc...). Selon la présente invention, le vecteur favorisant le passage de l'eau au travers du module d'échantillonnage est l'écoulement naturel de la nappe en un point donné.

L'invention a donc pour objet un dispositif de prélèvement d'eau souterraine comprenant au moins un module de prélèvement et des moyens de positionnement du module de prélèvement dans un forage, le module de prélèvement comprenant :
- un tube dont une partie constitue une zone de prélèvement latéral, permettant une communication de fluide entre l'intérieur et l'extérieur du tube,
- un piston disposé dans le tube, le piston et le tube pouvant coulisser de manière étanche l'un par rapport à l'autre, le piston comprenant un premier élément circulaire pourvu de moyens d'étanchéité avec le tube et un deuxième élément circulaire pourvu de moyens d'étanchéité avec le tube, les deux éléments étant reliés entre eux par des moyens de solidarisation et séparés l'un de l'autre de façon à constituer une chambre de prélèvement de fluide dans le piston lorsque le piston est à l'intérieur du tube,
- des moyens de déplacement aptes à déplacer le piston à l'intérieur du tube, entre une position de fermeture pour laquelle la chambre de prélèvement n'est pas en communication de fluide avec la zone de prélèvement du tube et une position d'ouverture pour laquelle la chambre de prélèvement est en communication de fluide avec la zone de prélèvement du tube,
   **caractérisé en ce que**
- la zone de prélèvement latéral du tube comprend des trous percés sur le pourtour du tube, la zone de prélèvement latéral présentant une hauteur déterminée,
- la distance séparant les deux éléments circulaires du piston est au plus égale à la hauteur déterminée de la zone de prélèvement du tube, moyennant quoi, dans la position d'ouverture, la chambre de prélèvement est totalement mise en correspondance avec la zone de prélèvement latéral du tube.

Selon un mode de réalisation, le tube comprend des moyens formant butée pour le piston, la chambre de prélèvement n'étant pas en communication de fluide avec la zone de prélèvement du tube lorsque le piston est en butée sur les moyens formant butée. Les moyens formant butée peuvent comprendre un épaulement interne au tube.

Si le dispositif de prélèvement comprend au moins deux modules, les tubes de chaque module peuvent comprendre des moyens de solidarisation permettant un aboutement des tubes, par exemple grâce à des moyens de vissage.

La paroi du tube peut comprendre une prise de prélèvement d'échantillon située en vis-à-vis de la chambre de prélèvement lorsque le piston est en position de fermeture.

De préférence, les moyens de solidarisation des deux éléments du piston sont constitués par un axe.

Le piston peut être en un matériau choisi parmi le PTFE (polytétrafluoroéthylène), le FEP (éthylène-propylène fluoré) et le PFA (perfluoroalkoxy).

Les moyens d'étanchéité peuvent comprendre des joints toriques.

Les moyens de déplacement du piston peuvent comprendre un axe de commande solidaire du piston par l'une de ses extrémités, l'autre extrémité de l'axe de commande recevant la commande de déplacement. Eventuellement, le dispositif comprenant au moins deux modules, les pistons des deux modules sont reliés par un même axe de commande. La liaison d'un axe de commande avec un piston peut être une liaison vis-écrou.

L'invention a aussi pour objet un procédé de prélèvement d'eau souterraine dans un forage au moyen d'un dispositif de prélèvement tel que défini ci-dessus, comprenant les étapes de:
- positionnement du module de prélèvement dans le forage pour que la chambre de prélèvement soit à une profondeur déterminée dans le forage, la chambre de prélèvement étant en position de fermeture,
- déplacement relatif du tube par rapport au piston pour placer la chambre de prélèvement en position d'ouverture,
- après une durée prédéterminée au bout de laquelle l'eau présente dans la chambre de prélèvement est considérée comme représentative de l'eau du forage à ladite profondeur déterminée, déplacement relatif du tube par rapport au piston pour placer la chambre de prélèvement en position de fermeture,
- remontée du module de prélèvement pour disposer du prélèvement réalisé.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- les figures 1A à 1E montrent différentes parties d'un module de prélèvement d'un dispositif de prélèvement d'eau souterraine selon la présente invention,
- les figures 2A à 2E illustrent l'utilisation d'un dispositif de prélèvement d'eau souterraine selon la présente invention.

### EXPOSÉ DÉTAILLÉ DE MODES DE RÉALISATION PARTICULIERS

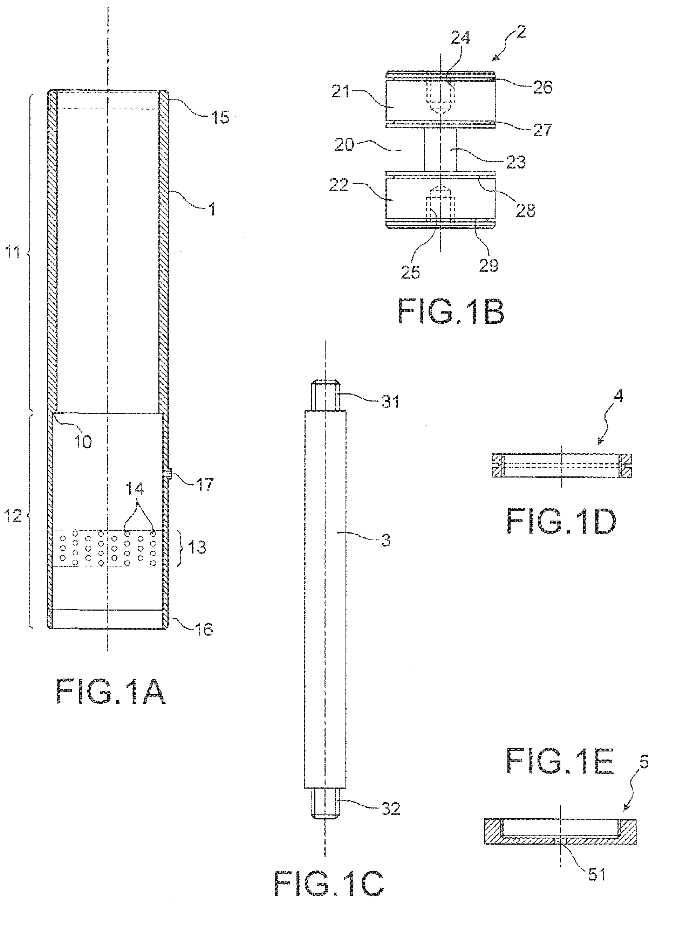

Les figures 1A à 1E montrent différentes parties d'un module de prélèvement d'un dispositif de prélèvement d'eau souterraine selon la présente invention. Ce dispositif de prélèvement, ou préleveur, peut comprendre plusieurs modules mis bout à bout. A titre d'exemple, un module de prélèvement peut avoir 300 mm de longueur pour un diamètre de 40 mm et permettre un prélèvement d'environ 30 ml d'eau.

La figure 1A montre un tube 1 en coupe longitudinale. La longueur du tube 1 correspond à la longueur du module de prélèvement. Le tube 1 comprend deux parties : une partie supérieure 11 et une partie inférieure 12. Le diamètre intérieur de la partie supérieure 11 est plus petit que le diamètre intérieur de la partie inférieure 12. Il en résulte un épaulement 10 à l'intérieur du tube 1. La partie inférieure 12 présente une zone de prélèvement 13 constituée par exemple de trous 14 percés dans la paroi du tube 1, permettant ainsi une communication de fluide entre l'intérieur et l'extérieur du tube 1. Chaque extrémité du tube 1 est pourvue d'un filetage : le filetage 15 à l'extrémité supérieure et le filetage 16 à l'extrémité inférieure. Le tube 1 peut être en acier inoxydable.

La figure 1B montre un piston 2 apte à se déplacer à l'intérieur du tube 1. Le piston 2 est constitué de deux éléments circulaires identiques 21 et 22 de diamètre légèrement inférieur au diamètre intérieur de la partie inférieure 12 du tube 1. Les éléments 21 et 22 sont rendus solidaires entre eux par un axe 23. Chaque extrémité du piston 2, c'est-à-dire les éléments 21 et 22, est percée, selon l'axe du piston, d'un trou fileté 24, 25. Les éléments 21 et 22 possèdent des gorges respectivement 26, 27 et 28, 29 pour le logement de joints toriques d'étanchéité. Le piston 2 peut être en Teflon^{®} et les joints toriques d'étanchéité peuvent être en Viton^{®}.

Les matériaux utilisés pour la fabrication du dispositif de prélèvement interagissent peu on n'interagissent pas avec les différents polluants à recueillir afin de minimiser les problèmes de sorption et de désorption sur les grandes surfaces d'échange que procure le dispositif de prélèvement selon la présente invention.

Le piston 2 se loge dans la partie inférieure 12 du tube 1 où il peut glisser de manière étanche jusqu'à venir en butée sur l'épaulement 10 du tube 1. Les dimensions du piston 2 sont calculées pour obtenir les conditions suivantes. Lorsque l'élément 21 du piston 2 arrive en butée sur l'épaulement 10 du tube 1, l'élément 22 ferme de manière étanche la zone de prélèvement 13. Lorsque le piston 2 est déplacé vers l'extrémité inférieure du tube 1, c'est-à-dire vers le filetage 16, il existe une position du piston pour laquelle la partie du piston comprise entre les éléments 21 et 22 vient en correspondance avec la zone de prélèvement 13 du tube 1. Cette partie du piston 2 constitue une chambre de prélèvement 20. Dans cette position, un fluide extérieur au dispositif peut circuler librement dans toute la chambre de prélèvement.

La figue 1C montre un axe 3 dont les extrémités sont pourvues de filetages 31 et 32. Un axe 3 permet de relier mécaniquement entre eux deux pistons de deux modules mis bout à bout, les filetages 31, 32 pouvant se visser dans des filetages 24, 25 de pistons d'un module supérieur et d'un module inférieur. L'axe 3 peut être en acier inoxydable.

Si le module de prélèvement comporte plusieurs modules, un élément de liaison fileté 4 en forme de bague, comme illustré par la figure 1D, permet de relier deux modules successifs en se vissant d'une part sur le filetage 16 d'un module et d'autre part sur le filetage 15 du module suivant. Le dernier module, c'est-à-dire le module de fond, peut être fermé par un bouchon 5 comme illustré sur la figure 1E. Le bouchon 5 est pourvu d'un trou 51 contribuant au refoulement de fluide lorsque le piston est déplacé.

Dans un tel dispositif de prélèvement à plusieurs modules, selon l'invention, l'actionnement de la tige située en haut du dispositif, au moyen d'un vérin hydraulique depuis la surface, permet de déplacer simultanément tous les pistons du dispositif entre une position de fermeture et une position d'ouverture des chambres de prélèvement 20, et inversement. Le dispositif de prélèvement selon l'invention permet de prélever un volume de fluide d'environ 30 ml avec un pas d'échantillonnage de 30 cm. La hauteur d'échantillonnage est réglable par l'ajout de modules. La hauteur d'investigation peut être de 6 m en utilisant vingt modules de 30 cm de long. Chaque module est doté d'une prise de prélèvement 17 avec un septum (voir la figure 1A), située dans la paroi du tube 1 et en vis-à-vis de la chambre de prélèvement lorsque le piston est en position de fermeture. Ce septum permet, grâce à une seringue et une aiguille de collecter du fluide à l'intérieur de la chambre de prélèvement en évitant les problèmes liés à ce transfert. Le dispositif selon l'invention est complètement démontable. Il peut donc être nettoyé correctement avec un solvant ou à l'alcool.

Pour son utilisation dans un forage d'observation, le préleveur selon l'invention est positionné à l'aide d'un treuil à une hauteur donnée dans le forage. De par sa conception, il est très facile de prélever des échantillons de fluide dans des nappes dont le niveau hydrostatique est inférieur à 10 m. Après un temps de contact donné, les échantillons d'eau aux différentes hauteurs sont isolés simultanément à l'aide d'un vérin commandé par une bouteille d'air comprimé, et le préleveur peut être ressorti du forage à l'aide du treuil.

Dès la sortie du préleveur, deux options sont possibles pour le conditionnement des échantillons d'eau à fin d'analyse. Dans le cas où il n'y a qu'un seul forage à échantillonner, il est possible de laisser les échantillons d'eau prélevés dans les modules du préleveur, de détacher les modules les uns après les autres et de les placer directement dans une glacière pour conserver les échantillons pendant leur transport vers un laboratoire d'analyses. Ainsi, on évite les problèmes engendrés par le transfert des échantillons dans des flacons avec tous les risques que cela comporte (perte d'échantillons, volatilisation des polluants, etc...). Dans le cas où la campagne de prélèvement comporte plusieurs forages ou hauteurs d'investigation, l'échantillon dans chaque module est prélevé à l'aide d'une seringue au travers du septum pour le transférer instantanément dans le flaconnage adéquat. Une fois cette opération réalisée, chaque module est démonté et nettoyé à l'aide d'un solvant adéquat suivi d'un rinçage à l'eau claire. Chaque partie constituant le module est alors rincée avec du méthanol. Après cela, l'assemblage des modules peut s'effectuer à nouveau et le préleveur est opérationnel pour l'échantillonnage dans un autre forage.

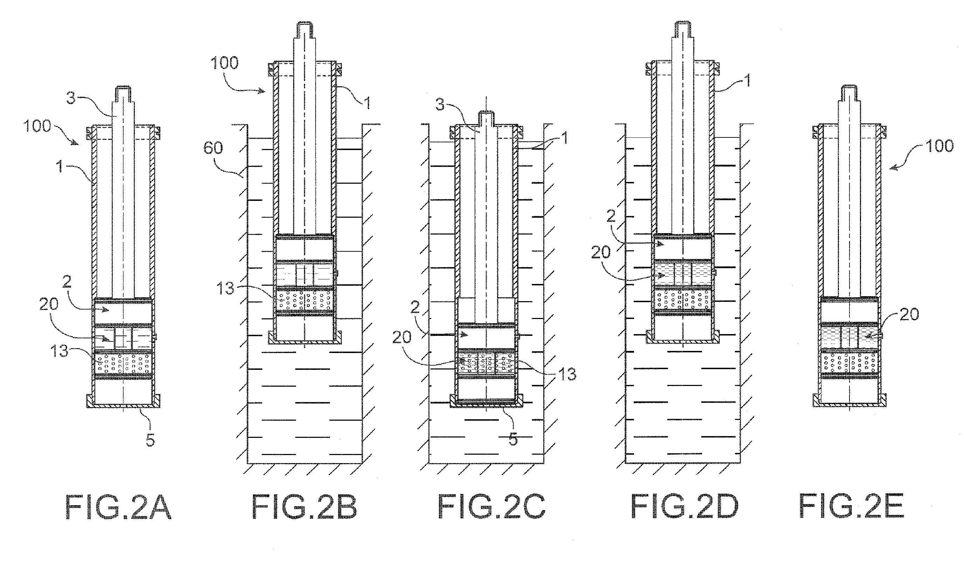

Les figures 2A à 2D illustrent de manière schématique l'utilisation d'un dispositif de prélèvement d'eau souterraine selon la présente invention. Sur ces figures, seul le dernier module (celui placé le plus bas dans le forage) a été représenté, le fonctionnement de tous les modules étant identique. Sur ces figures, les mêmes éléments que sur les figures 1A à 1E sont référencés à l'identique.

La figure 2A montre le dernier module 100 du préleveur, comprenant le tube 1, le piston 2, l'axe 3 et le bouchon 5, préparé pour la descente dans le forage. La chambre de prélèvement 20 du piston 2 est remplie d'eau propre, le piston 2 étant placé dans le tube 1 dans la position dite de fermeture pour laquelle la chambre de prélèvement 20 n'est pas en contact avec la zone de prélèvement 13 du tube (le piston est en butée contre l'épaulement 10 visible sur la figue 1A).

La figure 2B montre le module 100 mis en place à un niveau donné dans le forage, par exemple dans un piézomètre. Le piston 2 restant dans sa position initiale par rapport au tube 1, du fluide présent dans le piézomètre pénètre dans la partie inférieure du tube 1 par le trou 51 du bouchon 5 (voir la figure 1E).

Le piston 2 est ensuite déplacé grâce à l'axe 3 jusqu'à la position dite d'ouverture pour laquelle la chambre de prélèvement 20 est en contact avec la zone de prélèvement 13 du tube 1 (voir la figure 2C). La descente du piston 2 entraîne le refoulement de l'eau qui avait pénétré dans la partie inférieure du tube 1, ce refoulement se faisait par la zone de prélèvement 13 et par le trou 51 du bouchon 5 (voir la figure 1E). La chambre de prélèvement 20 est alors en communication de fluide avec l'eau du piézomètre se trouvant à son niveau. L'eau de la nappe circulant dans le piézomètre chasse l'eau propre contenue initialement dans la chambre et prélèvement 20. Ceci est facilité par la structure cylindrique du piston 2.

Après un certain temps au bout duquel on estime que l'eau circulant dans la chambre de prélèvement 20 est représentative de l'eau de la nappe à ce niveau, le piston 2 est remonté jusqu'à la position dite de fermeture (voir la figure 2D). La partie inférieure du tube 1 se remplit à nouveau de l'eau du forage, l'eau présente dans la chambre de prélèvement 20 est alors isolée de l'eau du forage.

La figure 2E montre le module 100 hors du piézomètre. L'eau présente dans la chambre de prélèvement 20 peut être prélevée au travers de la prise de prélèvement 17 (voir la figure 1A) pour être analysée.

Une étude effectuée en laboratoire, à l'aide d'un traceur fluorescent, a permis de déterminer la durée minimale au bout de laquelle l'eau emprisonnée dans le préleveur est représentative de celle du forage.

Les résultas indiquent qu'avec une vitesse réelle de nappe d'environ 1 mètre par jour, le volume d'échantillon du module est renouvelé dans sa totalité après un temps de contact d'au moins 6 heures. Cette durée est donc le temps minimum d'échantillonnage pour que le prélèvement soit représentatif en terme de représentation vis-à-vis de celle régnant dans le piézomètre.

Pour les prélèvements sur site, avec des vitesses de nappe inférieures à 1 mètre par jour, une durée d'échantillonnage de 24 heures sera donc suffisante pour assurer une bonne représentabilité des prélèvements multiniveaux dans le piézomètre d'observation.

## Revendications

1. Dispositif de prélèvement d'eau souterraine comprenant au moins un module de prélèvement (100) et des moyens de positionnement du module de prélèvement dans un forage, le module de prélèvement comprenant :
- un tube (1) dont une partie constitue une zone de prélèvement latéral (13), permettant une communication de fluide entre l'intérieur et l'extérieur du tube,
- un piston (2) disposé dans le tube (1), le piston et le tube pouvant coulisser de manière étanche l'un par rapport à l'autre, le piston (2) comprenant un premier élément circulaire (21) pourvu de moyens d'étanchéité (26, 27) avec le tube et un deuxième élément circulaire (22) pourvu de moyens d'étanchéité (28, 29) avec le tube (1), les deux éléments (21, 22) étant reliés entre eux par des moyens de solidarisation (23) et séparés l'un de l'autre de façon à constituer une chambre de prélèvement (20) de fluide dans le piston (2) lorsque le piston est à l'intérieur du tube (1),
- des moyens de déplacement (3) aptes à déplacer le piston (2) à l'intérieur du tube (1), entre une position de fermeture pour laquelle la chambre de prélèvement (20) n'est pas en communication de fluide avec la zone de prélèvement (13) du tube (1) et une position d'ouverture pour laquelle la chambre de prélèvement (20) est en communication de fluide avec la zone de prélèvement (13) du tube (1),
**caractérisé en ce que**
- la zone de prélèvement latéral (13) du tube (1) comprend des trous (14) percés sur le pourtour du tube, la zone de prélèvement latéral présentant une hauteur déterminée,
- la distance séparant les deux éléments circulaires (21, 22) du piston (2) est au plus égale à la hauteur déterminée de la zone de prélèvement du tube (1), moyennant quoi, dans la position d'ouverture, la chambre de prélèvement (20) est totalement mise en correspondance avec la zone de prélèvement latéral du tube (1).

2. Dispositif de prélèvement selon la revendication 1, dans lequel le tube (1) comprend des moyens formant butée (10) pour le piston (2), la chambre de prélèvement (20) n'étant pas en communication de fluide avec la zone de prélèvement (13) du tube (1) lorsque le piston (2) est en butée sur les moyens formant butée (10).

3. Dispositif de prélèvement selon la revendication 2, dans lequel les moyens formant butée comprennent un épaulement (10) interne en tube (1).

4. Dispositif de prélèvement selon l'une quelconque des revendications 1 à 3, dans lequel le dispositif de prélèvement comprenant au moins deux modules, les tubes (1) de chaque module comprennent des moyens de solidarisation permettant un aboutement des tubes (1).

5. Dispositif selon la revendication 4, dans lequel les moyens de solidarisation des tubes (1) comprennent des moyens de vissage (15, 16, 4).

6. Dispositif de prélèvement selon l'une quelconque des revendications 1 à 5, dans lequel la paroi du tube (1) comprend une prise de prélèvement d'échantillon située en vis-à-vis de la chambre de prélèvement (20) lorsque le piston est en position de fermeture.

7. Dispositif de prélèvement selon l'une quelconque des revendications 1 à 6, dans lequel les moyens de solidarisation des deux éléments (21, 22) du piston (2) sont constitués par un axe (23).

8. Dispositif de prélèvement selon l'une quelconque des revendications 1 à 7, dans lequel le piston est en un matériau choisi parmi le PTFE, le FEP et le PFA.

9. Dispositif de prélèvement selon l'une quelconque des revendications 1 à 8, **caractérisé en ce que** les moyens d'étanchéité (26 à 29) comprennent des joints toriques.

10. Dispositif de prélèvement selon l'une quelconque des revendications 1 à 9, dans lequel les moyens de déplacement du piston (2) comprennent un axe de commande (3) solidaire du piston par l'une de ses extrémités, l'autre extrémité de l'axe de commande (3) recevant la commande de déplacement.

11. Dispositif de prélèvement selon la revendication 10, dans lequel, le dispositif comprenant au moins deux modules (100), les pistons (2) des deux modules sont reliés par un même axe de commande (3).

12. Dispositif de prélèvement selon l'une des revendications 10 ou 11, dans lequel la liaison d'un axe de commande (3) avec un piston (2) est une liaison vis-écrou.

13. Procédé de prélèvement d'eau souterraine dans un forage au moyen d'un dispositif de prélèvement selon l'une quelconque des revendications 1 à 12, comprenant les étapes de:
- positionnement du module de prélèvement dans le forage pour que la chambre de prélèvement soit à une profondeur déterminée dans le forage, la chambre de prélèvement étant en position de fermeture,
- déplacement relatif du tube (1) par rapport au piston (2) pour placer la chambre de prélèvement en position d'ouverture,
- après une durée prédéterminée au bout de laquelle l'eau présente dans la chambre de prélèvement est considérée comme représentative de l'eau du forage à ladite profondeur déterminée, déplacement relatif du tube (1) par rapport au piston (2) pour placer la chambre de prélèvement en position de fermeture,
- remontée du module de prélèvement pour disposer du prélèvement réalisé.
